# EUROPÄISCHE PATENTANMELDUNG

(11) **EP 2 177 797 A1**
(43) Veröffentlichungstag der Anmeldung: **21.04.2010**
(21) Anmeldenummer: 09168736.8
(22) Anmeldetag: 26.08.2009
(51) Int. Cl.: F16K 1/22, F16K 27/02

(54) **Klappenventil für eine Verbrennungskraftmaschine**

(30) Priorität: 15.10.2008 DE 102008051339
(71) Anmelder: Pierburg GmbH, 41460 Neuss (DE)
(72) Erfinder: Lappan, Rolf, 50733, Köln (DE); Röhl, Reinhard, 40474, Düsseldorf (DE); Voigtländer, Karsten, 40625, Düsseldorf (DE); Vierkötter, Michael, 53840, Troisdorf (DE); Sovva, Elina, 40223, Düsseldorf (DE); Simon, Benjamin, 52399, Merzenich (DE)
(74) Vertreter: Ter Smitten, Hans

(57) **Zusammenfassung**

Klappenventil (1) für eine Verbrennungskraftmaschine mit einem Klappenstutzen (2), in dem eine Klappenwelle (3) gelagert ist, auf welcher eine Klappe (4) symmetrisch schräg verlaufend derart angeordnet ist, dass die Klappe (4) in geschlossenem Zustand des Klappenventils (1) an der Innenseite des Klappenstutzens (2) anschlägt, wobei die Klappe (4) elliptisch ausgeführt ist und dass an der Innenseite (5) des Klappenstutzens (2) Klappenfreigangsflächen (6) vorgesehen sind, die derart ausgebildet sind, dass die Klappe in einen voll geöffneten Zustand schwenkbar ist

## Beschreibung

Die Erfindung betrifft ein Klappenventil für eine Verbrennungskraftmaschine mit einem Klappenstutzen, in dem eine Klappenwelle gelagert ist, auf welcher eine Klappe symmetrisch schräg verlaufend derart angeordnet ist, dass die Klappe in geschlossenem Zustand des Klappenventils an der Innenseite des Klappenstutzens anschlägt.

Ein derartiges Klappenventil ist beispielsweise aus der DE 103 59 609 A1 bekannt. Diese Druckschrift offenbart ein Klappenventil, bei dem die Klappe symmetrisch schräg verlaufend auf der Klappenwelle angeordnet ist. Auf diese Weise kann eine umlaufende Anlage der Klappe gewährleistet werden, da die Lagerstellen einer derartigen Klappenwelle nicht mehr im Bereich der Klappe liegen. Das Problem einer Leckage über die Lagerstellen der Klappenwelle soll damit behoben sein. Um jedoch im geschlossenen Zustand ein dichtes Anliegen der Drosselklappe an die Innenwand des Klappenstutzens zu gewährleisten, besitzt die Klappe eine umlaufende Dichtung. Ein derartig ausgeführtes Klappenventil ist relativ teuer in der Herstellung, da die Dichtung entweder als zusätzliches Bauteil beschafft und montiert werden muss, oder beispielsweise mittels Montagespritzen anzuformen ist.

Der Erfindung liegt daher die Aufgabe zu Grunde, ein Klappenventil zu verschaffen, dass den o. g. Nachteil vermeidet.

Diese Aufgabe wird durch die Erfindung dadurch gelöst, dass die Klappe elliptisch ausgeführt ist und dass an der Innenseite des Klappenstutzens Klappenfreigangsflächen vorgesehen sind, die derart ausgebildet sind, dass die Klappe in einen voll geöffneten Zustand schwenkbar ist.. Auf diese Weise wird ein Klappenventil mit einer Klappe, die symmetrisch schräg auf der Klappenwelle angeordnet ist, geschaffen, wobei die Klappe ohne zusätzliche Abdichtungen, wie zum Beispiel eine umlaufende Dichtung, fluiddicht an der Innenseite des Klappenstutzens anliegen kann.

In einer besonders vorteilhaften Ausführungsform verläuft die Hauptachse der elliptisch ausgebildeten Klappe in voll geöffnetem Zustand parallel zur Strömungsrichtung im Klappenstutzen. Auch ist es für eine einfache Herstellung vorteilhaft, wenn der Strömungsquerschnitt des Klappenstutzens kreisrund ist.

Vorzugsweise schließt die Nebenachse der Klappe mit der Wellenachse der Klappenwelle einen Winkel a von 10 - 45 Grad ein. Weiterhin ist es vorteilhaft, wenn die Umfangsfläche der Klappe derart angeschrägt ist, dass bei Anschlag der Klappe diese Umfangsfläche an der Innenseite des Klappenstutzens anliegt.

Des Weiteren ist es denkbar, dass die Klappenwelle lediglich einseitig / einfach gelagert ist.

Im Folgenden wird unter Bezugnahme auf die Zeichnung ein Ausführungsbeispiel der Erfindung näher erläutert, hierin zeigt:
Figur 1 eine perspektivische Ansicht des erfindungsgemäßen Klappenventils,
Figur 2 eine schematische Schnittansicht des Klappenstutzens ohne Klappenwelle und Klappe,
Figur 3 eine schematische Schnittansicht des Klappenstutzens mit Klappenwelle und Klappe im geschlossenen Zustand, und
Figur 4 eine schematische Schnittansicht des Klappenstutzens mit Klappenwelle und Klappe in geöffnetem Zustand.

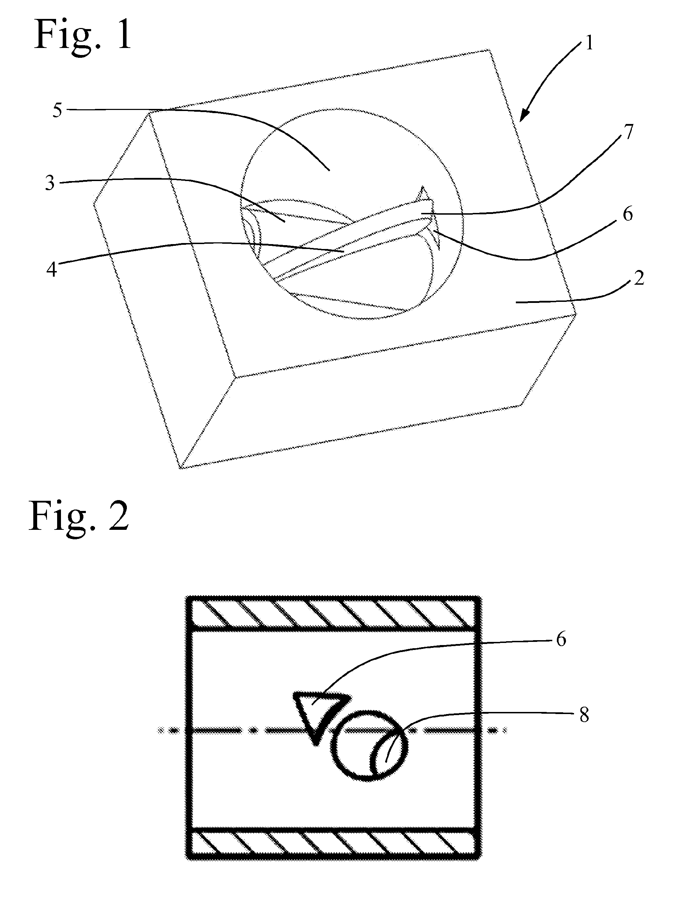

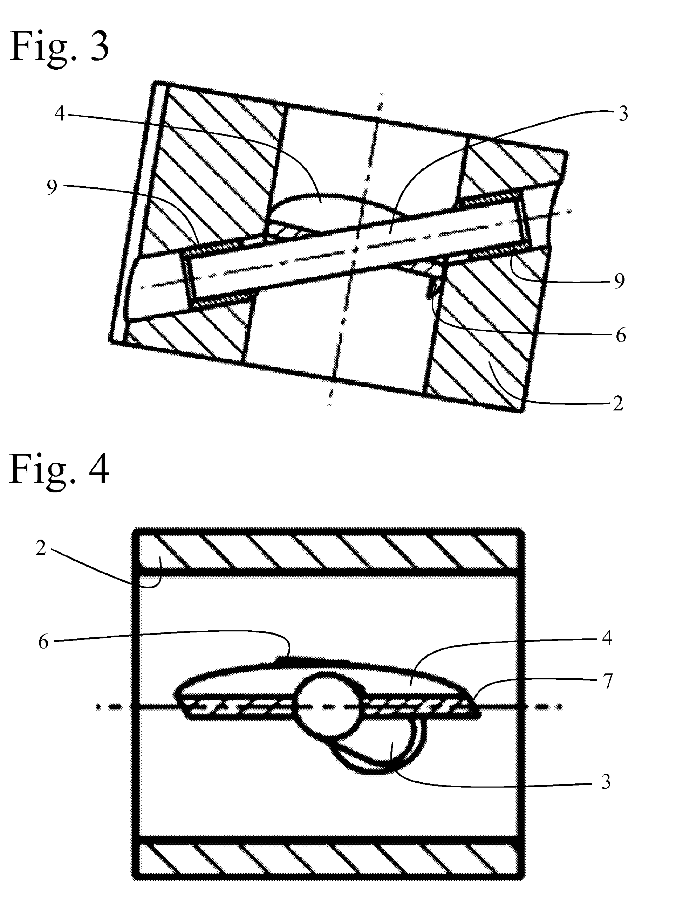

Figur 1 zeigt ein erfindungsgemäßes Klappenventil 1. Dieses Klappenventil 1 weist einen Klappenstutzen 2 mit einem kreisrunden Strömungsquerschnitt auf, in dem auf bekannte Weise eine Klappenwelle 3 gelagert ist. Auf dieser Klappenwelle ist eine Klappe 4 symmetrisch schräg verlaufend angeordnet. Die Klappe 4 ist elliptisch ausgeführt. An der Innenseite 5 des Klappenstutzens 2 sind Klappenfreigangsflächen 6, von denen jedoch nur eine in der Ansicht zu erkennen ist, vorgesehen. Diese Klappenfreigangsflächen 6 ermöglichen ein vollständiges Öffnen der elliptischen Klappe 4 im Klappenstutzen 2. Desweiteren ist die Umfangsfläche 7 der Klappe 4 derart angeschrägt ist, dass bei Anschlag der Klappe 4 diese Umfangsfläche 7 an der Innenseite 5 des Klappenstutzens 2 anliegt ( siehe auch Figur 3).

Figur 2 zeigt nun in einer schematischen Schnittansicht den Klappenstutzen 2 mit einer Wellenbohrung 8 zur Aufnahme der Klappenwelle 3 sowie einer der beiden Klappenfreigangsflächen 6.

Figur 3 zeigt den Klappenstutzen 2 in Schnittansicht mit der Klappe 4 in vollständig geschlossener Stellung. Lager 9 für die Klappenwelle 3 sind vollständig im Klappenstutzen 2 angeordnet, wodurch die Strömung nicht durch vorstehende Lagerteile negativ beeinflusst wird.

Um nun gemäß Figur 4 in eine vollständig geöffnete Stellung verschwenkt werden zu können, schwenkt die Klappe 4 in die Klappenfreigangsflächen 6 hinein. Die Hauptachse der elliptisch ausgebildeten Klappe 4 verläuft nun parallel zur Strömungsrichtung im Klappenstutzen 2.

Dabei sind die Klappenfreigangsflächen 6 abhängig vom Winkel α zu wählen, der zwischen der Nebenachse der ellipsenförmigen Klappe 4 und der Wellenachse der Klappenwelle 3 eingeschlossen wird. Der Winkelbereich für α liegt dabei sinnvollerweise zwischen 10 und 45 Grad.

Darüber hinaus ist es möglich, dass die Klappe 4 auch als Stanz-/Biegeteil ausgeführt wird.

Auch ist es natürlich möglich die Klappe 4 lediglich einseitig im Klappenstutzen 2 zu lagern.

## Patentansprüche

1. Klappenventil (1) für eine Verbrennungskraftmaschine mit einem Klappenstutzen (2), in dem eine Klappenwelle (3) gelagert ist, auf welcher eine Klappe (4) symmetrisch schräg verlaufend derart angeordnet ist, dass die Klappe (4) in geschlossenem Zustand des Klappenventils (1) an der Innenseite des Klappenstutzens (2) anschlägt,
**dadurch gekennzeichnet, dass** die Klappe (4) elliptisch ausgeführt ist und dass an der Innenseite (5) des Klappenstutzens (2) Klappenfreigangsflächen (6) vorgesehen sind, die derart ausgebildet sind, dass die Klappe in einen voll geöffneten Zustand schwenkbar ist.

2. Klappenventil nach Anspruch 1, **dadurch gekennzeichnet, dass** die Hauptachse der elliptisch ausgebildeten Klappe (4) in voll geöffnetem Zustand parallel zur Strömungsrichtung im Klappenstutzen (2) verläuft.

3. Klappenventil nach Anspruch 1 oder 2, **dadurch gekennzeichnet, dass** der Strömungsquerschnitt des Klappenstutzens (2) kreisrund ist.

4. Klappenventil nach einem der vorhergehenden Ansprüche, **dadurch gekennzeichnet, dass** die Nebenachse der Klappe (4) mit der Wellenachse der Klappenwelle (3) einen Winkel α von 10 - 45 Grad einschließt.

5. Klappenventil nach einem der vorhergehenden Ansprüche, **dadurch gekennzeichnet, dass** die Umfangsfläche (7) der Klappe (4) derart angeschrägt ist, dass bei Anschlag der Klappe (4) diese Umfangsfläche (7) an der Innenseite (5) des Klappenstutzens (3) anliegt.

6. Klappenventil nach einem der vorhergehenden Ansprüche, **dadurch gekennzeichnet, dass** die Klappenwelle (3) einseitig gelagert ist.
